# EUROPEAN PATENT SPECIFICATION

(11) **EP 1 847 428 B1**
(45) Date of publication and mention of the grant of the patent: **12.03.2014**
(21) Application number: 07105824.2
(22) Date of filing: 06.04.2007
(51) Int. Cl.: B60S 9/215

(54) **Parking device for motor vehicles**
Parkvorrichtung für Motorfahrzeuge
Dispositif de parking pour véhicules à moteur

(30) Priority: 21.04.2006 IT MI20060788
(43) Date of publication of application: 24.10.2007
(73) Proprietor: Offer, Danilo, 20093 Cologno Monzese MI (IT)
(72) Inventor: Offer, Danilo, 20093 Cologno Monzese MI (IT)
(74) Representative: Mittler, Enrico

(56) References cited:
- WO-A-97/19840
- DE-A1- 3 613 495
- DE-B- 1 108 095
- FR-A- 1 282 820
- US-A- 3 095 936

## Description

The present invention concerns a parking device for motor vehicles.

It is a known fact that parking cars in confined spaces is often very difficult. Normally, above all when the vehicle is large, numerous manoeuvres are required to achieve proper parking; the number of manoeuvres increases in the case of parking in an area alongside a pavement and between two other cars. The time lost to park can considerably increase in the case of a narrow road and where there is a lot of motor traffic; this leads to hurried parking manoeuvres with possible consequent damage to the car body as a result of collisions with the cars adjacent to the parking area or to the pavement.

WO 97/19840 discloses a device for the transverse movement of vehicles, in particular to facilitate the manoeuvring of motor cars, comprising a carriage unit 16 mounted underneath a vehicle and selectively movable from a retracted position to an extended position in which at least one and preferably two wheels 18 carried by the carriage unit press against the ground in order to raise the motor car at least partially from the ground. In the extended position of the carriage unit, a driving wheel can be selectively rotated in order to move the vehicle in a direction which is substantially transverse to the normal direction of movement of the vehicle itself. The transverse movement of the vehicle is activated by means of a push-button which is located inside the motor car or in a position which is easily accessible from outside the vehicle, as well as by means of a remote control. A selectively grasping means 54 limits the travel of the vehicle suspension members when the carriage unit is in the extended position.

DE 1108095 discloses a parking device according to the preamble of claim 1.

In view of the state of the art, the object of the present invention is to provide a parking device for motor vehicles that permits parking the motor vehicle easily and quickly.

According to the present invention, said object is achieved by means of a parking device for motor vehicles as defined in claim 1.

The characteristics and the advantages of the present invention will appear clear from the following detailed description of its practical embodiments, illustrated by way of, but not limited to, examples on the attached drawings, on which:
Figure 1 is a front view of the parking device fitted to a motor vehicle in accordance with the present invention;
Figure 2 is a schematic sectional view of the device in figure 1 in accordance with the line II-II;
Figure 3 is a schematic side view of the parking device that switches from an idle position to a work position.
Figure 4 shows a motor vehicle to which the parking device of figure 1 has been fitted;
Figure 5 shows details of the parking device of figure 1;
Figure 6 is an overhead view of a parking device according to a second embodiment of the invention;
Figure 7 shows a detail of the device of figure 6;
Figure 8 is a front view of a parking device according to a third embodiment of the invention;
Figure 9 shows a hooking device the parking device according to a variation of the invention embodiments;
Figures 10 and 11 show a hooking device of the parking device according to another variant of the embodiments of the invention;
Figures 12 and 13 are front schematic views of a parking device according to a fourth embodiment of the invention.

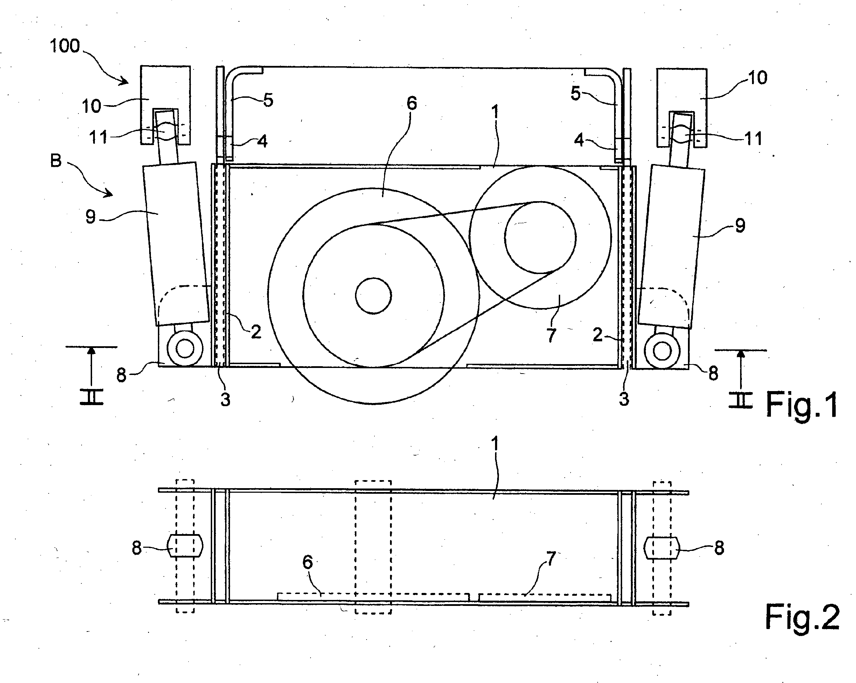

With reference to the figures 1-5 a parking device 100 for cars is shown according to the present invention. Said device is normally fitted underneath a motor vehicle and in particular underneath the rear part of the motor vehicle. The device comprises a frame 1 comprising guides 2 sliding on metal bars 3 hinged in 4 to a fixed part 5 integral with the bottom of the motor vehicle.

On the frame 1 are fitted a wheel 6 protruding from the frame 1 and hinged swivelling to the frame and means 7 for moving the wheel 6; said means can consist, for example, of an electric motor or of a hydraulic motor.

To the frame 1 are connected in 8 movement means 9, of the hydraulic or pneumatic or electromechanical type, fastened by means of means 10 to the bottom of the motor vehicle and hinged in 11 to the means 10.

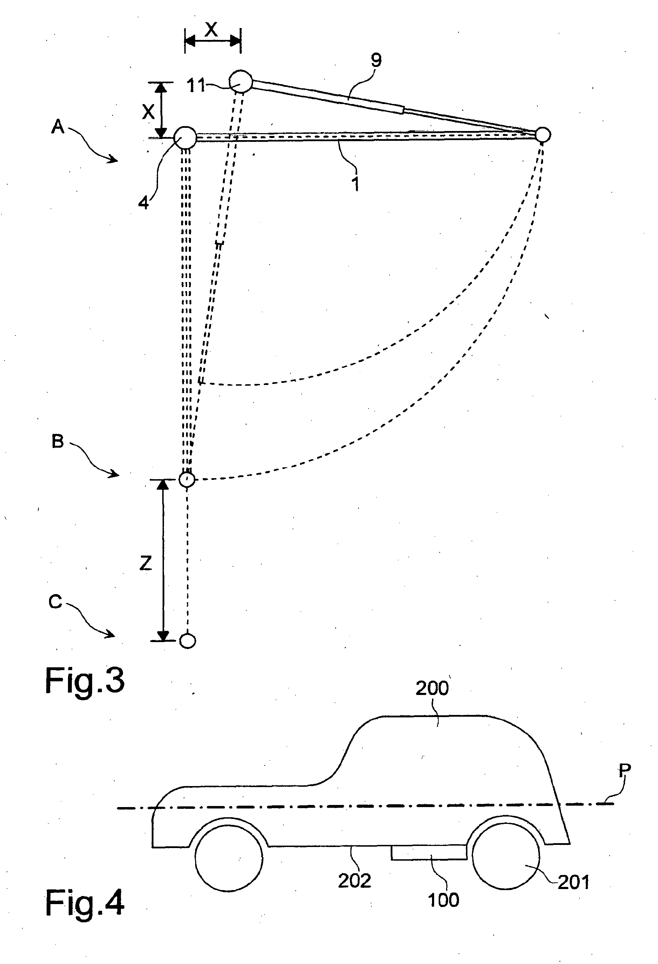

In idle position A, the parking device is aligned with the bottom of the motor vehicle, as can be seen in figure 3. When the motor vehicle reaches a parking area, the user inside the vehicle operates a control to start the parking device, for example an electric control.

This way, the parking device moves to a work position B by rotating by an angle substantially the same as a perpendicular angle of the frame 1 around the points 4 and of hydraulic means around the points 10.

The movement means 9 are subsequently started using the same control or by means of another control; the hydraulic means move downwards the frame 1 which bears the wheel 6 by means of sliding of same on the bars 3. This way, the wheel 6 rests on the road or floor surface and then presses on this to raise the rear part of the motor vehicle by a distance Z such that the rear wheels are lifted off the floor or road surface, and reach position C. The means 9 may be of the known market type.

A second timed manual control operates on the means 7 to turn the wheel 6 to the right or the left so as to cause the movement to the right or left of the motor vehicle, more specifically the rear part of the motor vehicle.

Once the motor vehicle has been parked, the previous controls are disengaged and the parking device returns to initial position A.

The hinged point 4 of the frame 1 to the means 5 is preferably arranged lower down, by a distance X, with respect to the hinge point 11 of the means 9 to the means 10. Preferably the same distance X exists between the same points with respect to the longitudinal axis P of the motor vehicle to which the device is fitted; the two distances X ensure a movement torque required by the means 9 to move the frame 1 from the idle position A to the work position B. The figure 4 schematically shows a motor vehicle 200 fitted with the parking device 100 attached to the bottom 202 of the motor vehicle near the rear wheels 201.

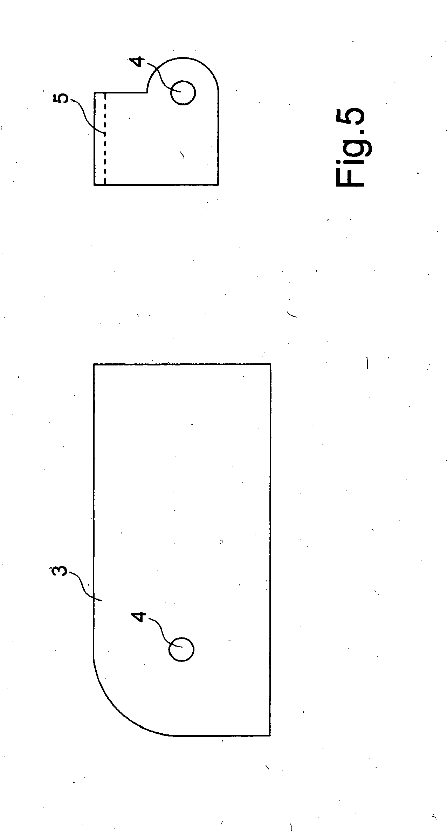

The figure 5 shows in greater detail the sliding bars 3 and the fixed parts 5. The sliding bars have a curved part for rotation around the hinged point 4 with the fixed parts 5.

The electric motor 7 could be driven by the same motor-vehicle battery.

The parking device according to the invention finds its best application in case of parking near pavements in the area between two already parked cars. In this case, it will be necessary to enter the parking area diagonally with the front part of the motor vehicle positioned so as to touch the pavement with a front wheel and a short distance from the other already-parked motor vehicle. In this position, the gear and brake will have to be disengaged and the parking device will have to be started for the placement of same in work position B and the lowering of the wheel 6 until the rear wheel of the motor vehicle lifts off the road surface and the same wheel turns towards the pavement as far as the required point; this way the car is aligned with the other two already parked.

To exit from the parking space, the reverse operation will have to be performed, meaning the parking device will have to be started to position this in work position B, the wheel 6 will have to be lowered until the rear wheels of the motor vehicle lift off the road surface, and the same wheel will have to be turned away from the pavement as far as the required point in order to manoeuvre the motor vehicle out of the parking space.

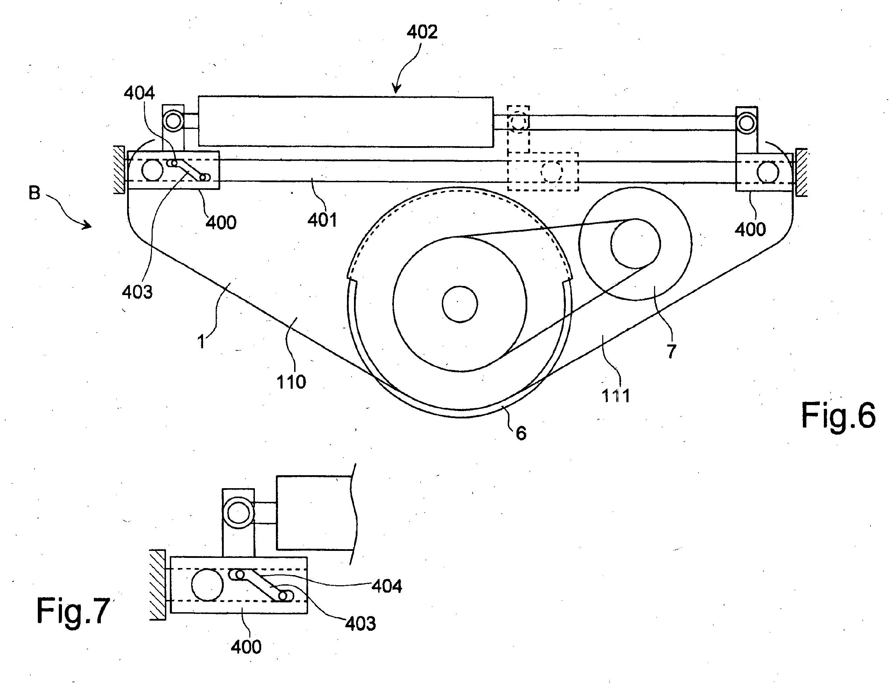

The figure 6 shows a parking device according to a second embodiment of the invention; the parts identical to those of the device in figure 1 will be indicated by means of the same reference numbers. Said device comprises the wheel 6 hinged rotatably on the frame 1; the latter comprises two parts 110 and 111 hinged rotatably on the pin of the wheel 6 and connected to two bushes 400 sliding on an axle 401. The bushes are connected to hydraulic or pneumatic or electromechanical means 402 which move them, the one with respect to the other, on the axle 401. The switch from the idle position A (shown by an unbroken line in figure 6), in which the frame 1 is substantially parallel to the bottom of the motor vehicle, to the work position B (broken line in the figure 6), in which the frame 1 is substantially perpendicular to the bottom of the motor vehicle, is ensured by a pin 403, integral with the axle 401, on which slides a cavity 404 made on at least one bush 400. The shape of the cavity 404 and the sliding of the cavity 404 on the pin 403 (as better shown in figure 7) when the bush 400 is moved longitudinally by the means 402, determine the rotation of the frame 1 and consequently its movement from the idle position A to the work position B. A greater traction of the means 402 permits, by means of a scissors movement of the parts 110 and 111 of the frame 1, the movement of the wheel 6 downwards to lift the rear or front part of the motor vehicle by such a distance that the rear wheels lift off the floor or road surface, obtaining the position C.

In the event of a special motor-vehicle compartment being provided able to contain the parking device in figure 6, the mechanism of the cavity 404 sliding on the pin 403 is no longer necessary to produce the rotation of the frame 1.

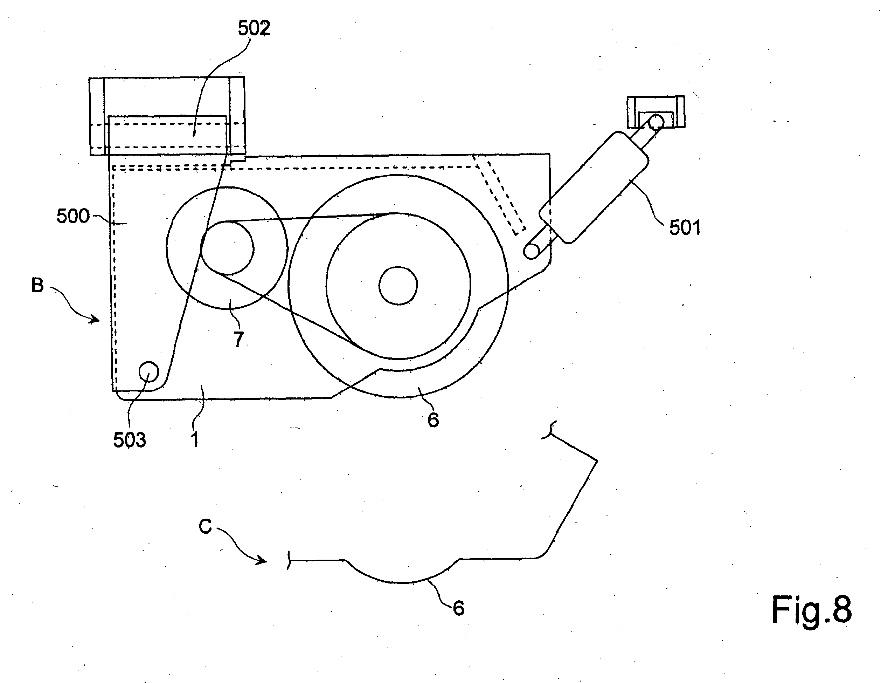

The figure 8 shows a parking device according to a third embodiment of the invention; the parts identical to those of the device in figure 1 will be shown with the same reference numbers. Unlike the parking device in figure 1, the parking device in figure 8 has the frame rotatably pivoting in 503 on a body 500 turnable by a right angle with respect to an axle 502 connected to the bottom of the motor vehicle. The frame 1 is therefore turnable, by means of the rotation of the body 500 on the axle 502, from an idle position A in which the frame itself is substantially parallel to the bottom of the motor vehicle to a work position B in which the frame 1 is substantially perpendicular to the bottom of the motor vehicle. The pneumatic or hydraulic or electro-mechanical means 501 produce both the rotation of the frame 1 from the position A to the position B and the downward movement of the wheel 6, by operating on the frame 1 rotatably pivoting in 503 on the body 500, to lift the rear or front part of the motor vehicle by such a distance that the rear wheels lift off the floor or road surface, obtaining the position C.

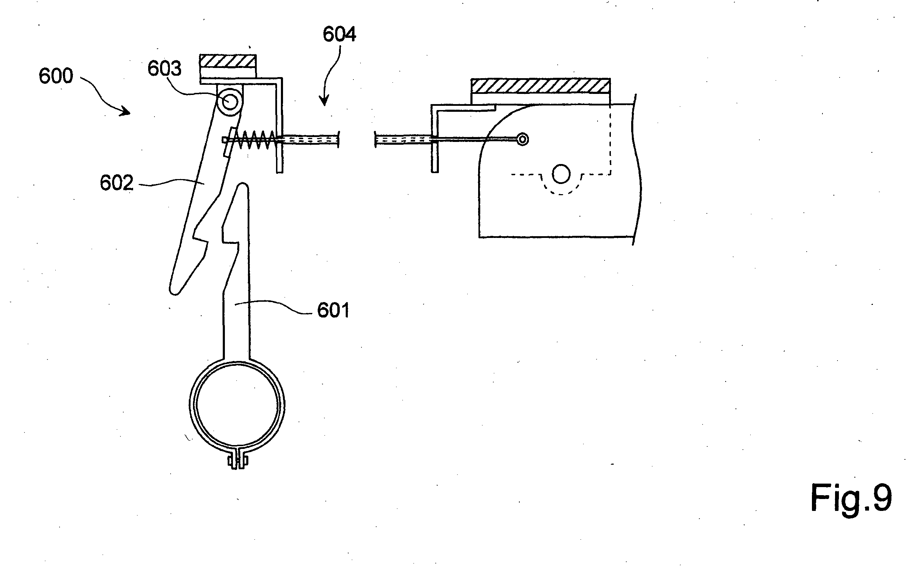

The figure 9 shows a hooking device 600 belonging to the parking device in agreement with a variation of the embodiments of the present invention. The hooking device 600 comprises a first hook 601 connected to the axle shaft of the rear or front wheels of the motor vehicle and a second hook 602 connected to the bottom of the motor vehicle so as to be rotatably pivoting at the point 603. The hooking device 600 comprises means 604 which, when the parking device is moved from position A to position B, operate on the hook 602 to allow coupling with the hook 601; this way, during the time the parking device takes to reach position C, the wheels of the motor vehicle remain blocked and a slight downward movement of the wheel 6 is needed to allow the rear or the front wheels to lift off the road surface. The means 604 can be made up of a steel braid with a flexible sheath.

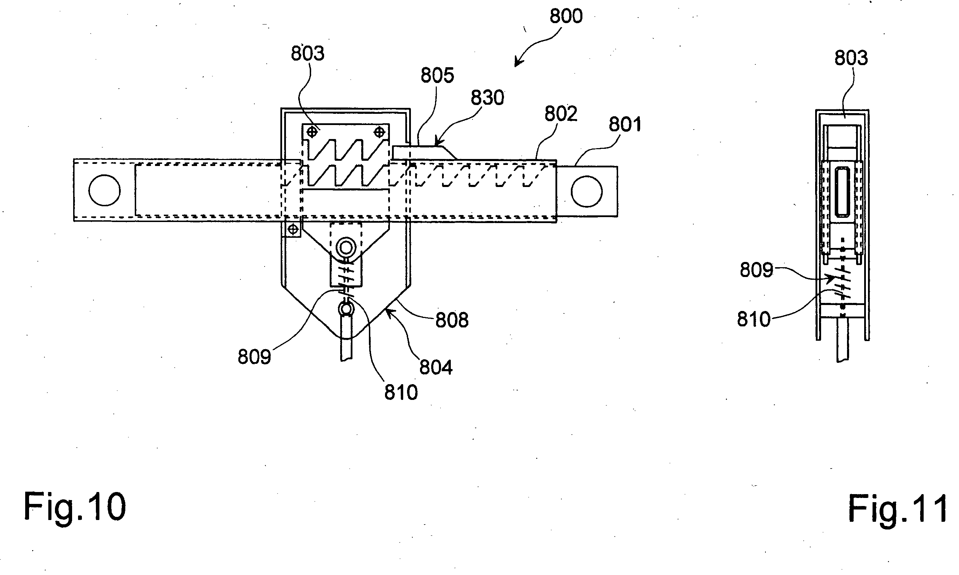

Figures 10 and 11 show a hooking device 800 belonging to the parking device according to another variant of the embodiments of the invention. The hooking device 800 comprises a rack 801 coupled to the axle shaft of the rear or front wheels of the car and a guide 802 sliding on the rack and anchored to the planar of the car; a toothed part 803 is brought in a sliding way by guides 830 on the guide 802. The hooking device 800 comprises means 804 connected with the toothed part 803 which, when the parking device is activated, act on the same toothed part for allowing the coupling of the toothed part with the rack 801; in such a way, when the parking device reaches the position C, the wheels of the car remain blocked and it is necessary only a small movement downwards of the wheel of the parking device to allow the separation of the front or rear wheels of the car from the road-bed. The means 804 can be constituted by a lock 808 provided with a spring 809 and a flexible wire 810 allowing the compression of the spring 809; a traction of the wire 810 allows the compression of the spring 809 and the coupling of the toothed part 803 with the rack 801 while the release of the spring 809 allows the uncoupling of the toothed part 803 from the rack 801.

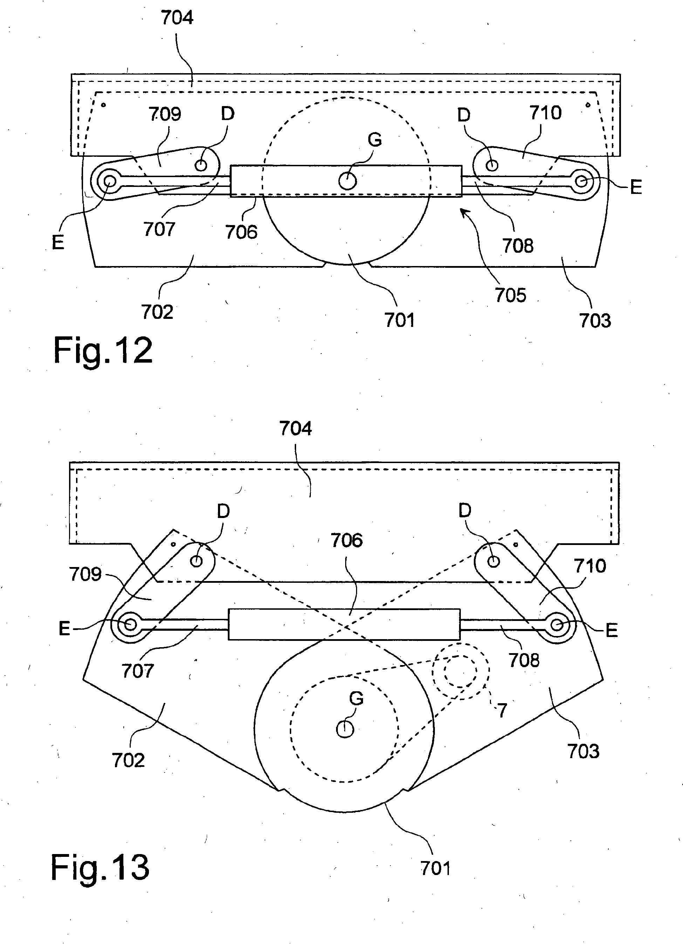

Figures 12 and 13 show of a parking device for cars according to a fourth embodiment of the invention. The parking device comprises a wheel 701 swivelling hinged at G with two plates 702 and 703 which are swivelling coupled with a plate 704 integral with of the bottom surface of the car; the wheel is arranged orthogonal to the bottom surface of the car, that is it is arranged with its rotation axis G parallel to the bottom surface of the car. The plates 702 and 703 and the wheel 701 are moved by means 705 allowing the movement of the wheel from a idle position AA next to the bottom surface of the car to a position BB away from the bottom surface of the car. The vertical movement means 705 comprise, for example, an oleodynamic or a screw shaft 706 comprising arms 707 and 708 swivelling hinged with plates 709, 710, for example, partially rotation rocker levers, which in turn are swivelling hinged with the plates 702 and 703 at the points E and with the support 704 at the points D. The rocker levers 709, 710 allow the coupling of the plates 702 and 703 with the fixed plate 704.

The cylinder 706, by means of an electric control which derives from a suitable push-button, controls, in traction phase, the sliding inside the cylinder of the arms 707 and 708 for bringing next to each other and consequently it controls the reduction of the distance of the points E of the swivelling coupling of the arms 707, 708 with the rocker levers 709, 710 and with the plates 702, 703. The approach of the coupling points E of the rocker levers 709, 710 determines a rotation of the rocker levers at the points D and a movement downwards of the cylinder 706. These movements set a rotation of the plates 702, 703 around the shaft G of the wheel 701 from which it is obtained a stroke of the wheel 701 downwards, for example towards the road-bed, to the arrive at the position BB and it is obtained a lifting of the car.

When the lifting of the car happens, an electric or oleodynamic motor 7, typically arranged in one of the plates 702, 703, controls a rotation of the wheel 701 for moving the car in the required direction.

At the end of the movement operation of the car, a suitable control allows the inverse stroke of the arms 707, 708 inside the cylinder 706 for moving away from each other and this provides to move away the points E from each other, the rotation of the rocker levers at the points D and the rotation of the plates 702, 703 at the point G for bringing back the wheel 701 from the operation position BB to the idle position AA.

Particularly the device in Figure 12 is provided with two oleodynamic cylinders and with fourth rocker levers hinged at four points D symmetrical with respect to the plates 702 and 703.

## Claims

1. Parking device for motor vehicles having a front and a rear part both of which with at least one wheel (201), said parking device comprising at least one wheel (701) and movement means (705) adapted to move the wheel from an idle position (AA) in which it is adjacent with the bottom of the motor vehicle downwards to a operating position (B) in which it is moved away from the bottom of the motor vehicle until the at least one wheel of the rear or front part of the motor vehicle lifts off the road-bed (BB), said wheel of the parking device having at said operating position a rotation axis substantially parallel to the bottom of the motor vehicle and said parking device comprising means (7) for moving said at least one wheel (701) of the parking device for the rotation of the same, **characterised by** comprising a frame (702, 703) adapted to bring said at least one wheel (701), said frame comprising a first (702) and a second (703) part which are swivelling hinged with said wheel, swivelling coupled with said movement means (705) and swivelling connected with a support plate (704) integral with the bottom of the motor vehicle, said movement means (705) being adapted to determine a rotation of the two parts of the frame at the point of hinging with the wheel for forming the lowering of said at least one wheel of the device until the at least one wheel of the rear or front part of the motor vehicle lifts off the road-bed (BB), said movement means (705) comprising an oleodynamic cylinder (706), two arms (707, 708) partially sliding inside the cylinder and hinged with the two parts of the frame (702, 703) and with two rocker levers (709, 710) swivelling coupled with the support plate (704) fixed with the bottom of the motor vehicle so that a movement next to each other of the arms inside the cylinder determines a lowering of the wheel and a movement away from each other of the arms determines an elevation of the wheel from the operating position to the idle position.

2. A device according to claim 1, **characterised by** comprising means to activate said oleodynamic cylinder.

3. A device according to claim 1, **characterised in that** is comprised a device (600, 800) for hooking an axle shaft of at least one wheel of the rear or front part of the motor vehicle to the bottom of the motor vehicle, said hooking device (600, 800) being operated by operating means (604, 804) in the operating position (B).

4. A device according to claim 3, **characterised in that** said hooking device (800) comprises a rack (801) anchored to the shaft of the rear or front wheels of the motor vehicle, a guide (802) slidable on the rack and connected to the planar of the motor vehicle, a toothed part (803) slidably brought by means of further guides (830) on said guide (802), said operating means (804) being coupled with the toothed part (803) which, when the parking device is activated, act on the same toothed part to allow its coupling with the rack (801).

5. A device according to claim 1, **characterised in that** said wheel movement means (7) are an electric motor.

6. A device according to claim 1, **characterised in that** said means (7) for moving the wheel are a hydraulic motor.

7. Motor vehicle having a front and a rear part both with at least one wheel (201) and comprising a parking device as defined in the preceding claims, said device being fitted on the bottom of the rear part of the motor vehicle.

## Patentansprüche

1. Parkvorrichtung für Kraftfahrzeuge mit einem vorderen und einem hinteren Teil, die beide mindestens ein Rad (201) aufweisen, wobei die Parkvorrichtung mindestens ein Rad (701) und eine Bewegungseinrichtung (705) aufweist, die dazu ausgebildet ist, das Rad von einer Ruheposition (AA), in der es benachbart der Unterseite des Kraftfahrzeugs ist, nach unten in eine Betriebsposition (B) zu bewegen, in der es von der Unterseite des Kraftfahrzeugs weg bewegt wird, bis das mindestens eine Rad des hinteren oder vorderen Teils des Kraftfahrzeugs vom Straßenbett (BB) abhebt, wobei das Rad der Parkvorrichtung in der Betriebsposition eine Rotationsachse im Wesentlichen parallel zur Unterseite des Kraftfahrzeugs aufweist und die Parkvorrichtung eine Einrichtung (7) zum Bewegen des mindestens einen Rads (701) der Parkvorrichtung für die Rotation desselben aufweist, **dadurch gekennzeichnet, dass** sie einen Rahmen (702, 703) aufweist, der dazu ausgebildet ist, das mindestens eine Rad (701) zu verbringen, wobei der Rahmen ein erstes (702) und ein zweites Teil (703) aufweist, die an dem Rad schwenkbar angelenkt sind, mit der Bewegungseinrichtung (705) schwenkbar gekoppelt sind und mit einer mit der Unterseite des Kraftfahrzeugs integralen Trägerplatte (704) schwenkbar verbunden sind, wobei die Bewegungseinrichtung (705) dazu ausgebildet ist, eine Rotation der beiden Teile des Rahmens an dem Punkt der gelenkigen Verbindung mit dem Rad zu bestimmen, um für das Absenken des mindestens einen Rads der Vorrichtung zu sorgen, bis das mindestens eine Rad des hinteren oder vorderen Teils des Kraftfahrzeugs von dem Straßenbett (BB) abhebt, wobei die Bewegungseinrichtung (705) einen öldynamischen Zylinder (706), zwei Arme (707, 708), die teilweise im Inneren des Zylinders verschiebbar sind und mit den beiden Teilen des Rahmens (702, 703) und mit zwei Kipphebeln (709, 710) gelenkig verbunden sind, die mit der an der Unterseite des Kraftfahrzeugs befestigten Trägerplatte (704) derart schwenkbar gekoppelt sind, dass eine Bewegung der Arme zueinander hin im Inneren des Zylinders eine Absenkung des Rads bedingt und eine Bewegung der Arme voneinander weg ein Anheben des Rads aus der Betriebsposition in die Ruheposition bedingt.

2. Vorrichtung nach Anspruch 1, **dadurch gekennzeichnet, dass** sie eine Einrichtung zum Aktivieren des öldynamischen Zylinders aufweist.

3. Vorrichtung nach Anspruch 1, **dadurch gekennzeichnet, dass** sie eine Vorrichtung (600, 800) zum Einhaken an einer Achswelle von mindestens einem Rad des hinteren oder vorderen Teils des Kraftfahrzeugs und an der Unterseite des Kraftfahrzeugs aufweist, wobei die Einhakvorrichtung (600, 800) durch eine Betätigungseinrichtung (604, 804) in der Betriebsposition (B) betätigt wird.

4. Vorrichtung nach Anspruch 3, **dadurch gekennzeichnet, dass** die Einhakvorrichtung (800) eine Zahnstange (801), die an der Achswelle der hinteren oder vorderen Räder des Kraftfahrzeugs verankert ist, eine Führung (802), die auf der Zahnstange verschiebbar ist und mit der Ebene des Kraftfahrzeugs verbunden ist, und ein Zahnteil (803) aufweist, das durch weitere Führungen (830) auf der Führung (802) verschiebbar angebracht ist, wobei die Betätigungseinrichtung (804) mit dem Zahnteil (803) gekoppelt ist und bei aktivierter Parkvorrichtung auf das genannte Zahnteil wirkt, um dessen Kopplung mit der Zahnstange (801) zu ermöglichen.

5. Vorrichtung nach Anspruch 1, **dadurch gekennzeichnet, dass** es sich bei der Radbewegungseinrichtung (7) um einen Elektromotor handelt.

6. Vorrichtung nach Anspruch 1, **dadurch gekennzeichnet, dass** es sich bei der Radbewegungseinrichtung (7) um einen Hydraulikmotor handelt.

7. Kraftfahrzeug mit einem vorderen und einem hinteren Teil, die beide mindestens ein Rad (201) aufweisen, und mit einer Parkvorrichtung nach einem der vorhergehenden Ansprüche, wobei die Vorrichtung an der Unterseite des hinteren Teils des Kraftfahrzeugs angebracht ist.

## Revendications

1. Dispositif de stationnement pour véhicules à moteur ayant une partie avant et une partie arrière, dont les deux ont au moins une roue (201), ledit dispositif de stationnement comprenant au moins une roue (701) et des moyens de déplacement (705) adaptés pour faire descendre la roue d'une position inactive (AA) dans laquelle elle est adjacente au bas du véhicule à moteur jusqu'à une position active (B) dans laquelle elle est déplacée du bas du véhicule à moteur jusqu'à ce que la au moins une roue de la partie arrière ou avant du véhicule à moteur se soulève de la plateforme (BB), ladite roue du dispositif de stationnement ayant dans ladite position active, un axe de rotation sensiblement parallèle au bas du véhicule à moteur et ledit dispositif de stationnement comprenant des moyens (7) pour déplacer ladite au moins une roue (701) du dispositif de stationnement pour la rotation de cette dernière, **caractérisé en ce qu'**il comprend un bâti (702, 703) adapté pour amener ladite au moins une roue (701), ledit bâti comprenant une première (702) et une seconde (703) partie qui sont articulées de manière oscillante avec ladite roue, couplées de manière oscillante avec lesdits moyens de déplacement (705) et raccordées de manière oscillante avec une plaque de support (704) solidaire du bas du véhicule à moteur, lesdits moyens de déplacement (705) étant adaptés pour déterminer une rotation des deux parties du bâti au point d'articulation avec la roue pour former l'abaissement de ladite au moins une roue du dispositif jusqu'à ce que la au moins une roue de la partie arrière ou avant du véhicule à moteur se soulève de la plateforme (BB), lesdits moyens de déplacement (705) comprenant un cylindre oléodynamique (706), deux bras (707, 708) coulissant partiellement à l'intérieur du cylindre et articulés avec les deux parties du bâti (702, 703) et avec deux culbuteurs (709, 710) couplés de manière oscillante avec la plaque de support (704) fixée avec le bas du véhicule à moteur de sorte qu'un mouvement des bras l'un après l'autre à l'intérieur du cylindre détermine l'abaissement de la roue et un éloignement des bras détermine une élévation de la roue, de la position active à la position inactive.

2. Dispositif selon la revendication 1, **caractérisé en ce qu'**il comprend des moyens pour activer ledit cylindre oléodynamique.

3. Dispositif selon la revendication 1, **caractérisé en ce qu'**il est composé d'un dispositif (600, 800) pour accrocher un arbre d'essieu d'au moins une roue de la partie arrière ou avant du véhicule à moteur au bas du véhicule à moteur, ledit dispositif d'accrochage (600, 800) étant actionné par des moyens d'actionnement (604, 804) dans la position active (B).

4. Dispositif selon la revendication 3, **caractérisé en ce que** ledit dispositif d'accrochage (800) comprend une crémaillère (801) ancrée à l'arbre des roues arrière ou avant du véhicule à moteur, un guide (802) pouvant coulisser sur la crémaillère et raccordé au plan du véhicule à moteur, une partie dentée (803) amenée de manière coulissante au moyen de guides supplémentaires (830) sur ledit guide (802), lesdits moyens d'actionnement (804) étant couplés avec la partie dentée (803) qui, lorsque le dispositif de stationnement est activé, agissent sur la même partie dentée pour permettre son couplage avec la crémaillère (801).

5. Dispositif selon la revendication 1, **caractérisé en ce que** lesdits moyens de déplacement de roue (7) sont un moteur électrique.

6. Dispositif selon la revendication 1, **caractérisé en ce que** lesdits moyens (7) pour déplacer la roue sont un moteur hydraulique.

7. Véhicule à moteur ayant une partie avant et une partie arrière, les deux avec au moins une roue (201) et comprenant un dispositif de stationnement selon les revendications précédentes, ledit dispositif étant monté sur le bas de la partie arrière du véhicule à moteur.
